Europäisches Patentamt

European Patent Office

Office européen des brevets

(19)

(11) Publication number: **0 226 410**
**A2**

(12) **EUROPEAN PATENT APPLICATION**

(21) Application number: **86309488.4**

(22) Date of filing: **05.12.86**

(51) Int. Cl.⁴: **B 29 C 65/34**
**B 29 C 55/22**

(30) Priority: **09.12.85 GB 8530267**

(43) Date of publication of application:
**24.06.87 Bulletin 87/26**

(84) Designated Contracting States:
**DE FR GB IT NL SE**

(71) Applicant: **DU PONT CANADA INC.**
**Box 2200 Streetsville Postal Station**
**Mississauga Ontario L5M 2H3(CA)**

(72) Inventor: **Thompson, John Rowson**
**No. 1, Glenburnie**
**Ontario, K0H 1S0(CA)**

(74) Representative: **Ellis, Edward Lovell et al,**
**MEWBURN ELLIS & CO. 2/3 Cursitor Street**
**London EC4A 1BQ(GB)**

(54) Method of making a plastic-lined pipe.

(57) A method for lining tubular structures comprises stretching a pipe, formed from thermoplastic material and having an outer diameter greater than the internal diameter of the tubular structure, to the extent that the outer diameter of the pipe is less than the internal diameter of the tube. The tube is then placed over the stretched pipe and the tension in the stretched pipe is released. The stretched pipe contracts longitudinally and expands readially against the inside of the tubular structure, thereby forming a liner. In an emodiment, the tubular structure (30) is a steel pipe and the thermoplastic pipe (20) is a polyethylene pipe. The thermoplastic pipe (20) is stretched by anchoring barbed couplers (23, 24) in the ends (21, 22) of the pipe, inserting a pushrod (27) through the coupler (23) to abut a member (26) anchored in the coupler (24), and screwing a bolt (28) into coupler (23) to abut and push the end of the pushrod (27) until the required stretching of the pipe (20) has been achieved.

FIG. 2

EP 0 226 410 A2

# METHOD OF MAKING A PLASTIC-LINED PIPE

This invention relates to a method for lining tubular structures and more particularly it relates to a method for producing thermoplastic material-lined tubular structures, for example pipes.

Metal or ceramic pipes are not satisfactory for handling many fluids which have corrosive or abrasive characteristics. To overcome this deficiency, such pipes have been lined with plastic materials resistant to attack by the fluids to be conveyed in the pipes.

United States Patent 3 429 954 of B.L. Atkins et al, issued 1969 February 25, discloses a process for lining pipe comprising irradiating a tube of ethylene/acrylic acid copolymer to cross-link the copolymer; heating the tube to soften it; stretching the softened tube longitudinally to reduce its diameter to less than the inner diameter of the pipe that is to be lined; setting the tube by cooling while in the stretched condition; placing the stretched tube inside the pipe; and heating the tube to a temperature sufficient to allow it to shrink longitudinally and to expand radially to provide a tight fit between the tubing and the internal surface of the pipe.

United Kingdom Patent GB 2 084 686B of S. Muir, published 1984 May 16, discloses using a roll stand of a type known in the art to roll-reduce a polyolefin pipe having an outside diameter greater than the inside diameter of a pipe to be lined, to an outside diameter less than said inside diameter. After the diameter of the polyolefin pipe has been roll-reduced, and the length thereof increased, the polyolefin pipe is inserted into the pipe to be

DC-0193

lined. The polyolefin pipe is then heated to a temperature sufficient to allow it to shrink longitudinally and to expand radially into tight contact with the inside wall of the pipe being lined.

U.S. Patent 3 856 905 of D.H. Dawson, issued 1974 December 24, discloses lining a pipe by radially deforming a thermoplastic liner with little or no axial deformation, the initial outside diameter of the liner being greater than the inside diameter of the pipe, inserting the liner into a pipe and heating the liner to cause it to expand to fit tightly into the pipe.

In U.S. Patent 3 959 424, issued 1976 May 25, D.H. Dawson et al disclose a process for lining pipe and fittings including providing a thermoplastic liner having a diameter greater than the pipe, compressing the liner to reduce its diameter until the liner can be positioned within the pipe, inserting the liner into the pipe and permitting the liner to expand, preferably at an elevated temperature, to fit the pipe. The liner diameter is preferably reduced by everting the liner by hydraulically drawing it around an annular mandrel.

The method of lining pipe disclosed in the aforementioned United States Patent 3 429 954 requires the use of: a cross-linkable copolymer tube; two heating steps; and a cooling step, in addition to the step of stretching the tube longitudinally. The method disclosed in the aforementioned United Kingdom Patent GB 2 084 686B requires expensive roll-reducing means to roll-reduce the diameter of the polyolefin pipe, and increase it in length, and heating means to expand the polyolefin pipe radially inside the pipe being lined.

It has now been found that a tubular structure, for example, a pipe, may be lined with a plastic pipe liner by stretching the plastic pipe liner longitudinally under sufficient tension to reduce its outside diameter to less than the inner diameter of the tubular structure to be lined, while maintaining said tension, inserting the stretched plastic pipe liner into the tubular structure, and thereafter releasing said tension to allow the pipe liner to contract longitudinally and expand radially into tight contact with the inside wall of the tubular structure being lined.

Accordingly, the present invention provides a method for producing a tubular structure lined with thermoplastic material, the method comprising the steps of:

(a) stretching a pipe liner of thermoplastic polymer having an outside diameter greater than the inside diameter of the tubular structure to be lined, in a longitudinal direction under sufficient tension to reduce the outer diameter of the pipe liner to less than the inside diameter of the tubular structure to be lined,

(b) while maintaining said tension in the stretched pipe liner, inserting the pipe liner inside the tubular structure to be lined, and

(c) releasing the tension in the stretched pipe liner to allow it to contract longitudinally and expand radially against the inside wall of the tubular structure.

The present invention further provides a method for producing a tubular structure lined with thermoplastic polymer, the method comprising in sequence:

(a) providing a pipe liner of synthetic thermoplastic polymer having an outside diameter from about 2 percent to about 6 percent larger than the inside diameter of the tubular structure to be lined,

(b) applying tension in a longitudinal direction to said liner thereby elongating and reducing the diameter of said liner, so that the reduced outside diameter of said liner while under tension is sufficiently smaller than the inside diameter of the tubular structure to be lined that the liner readily passes through the tubular structure and so that the elongation of the liner is below the upper limit of the elastic-plastic range for the polymer of said pipe liner,

(c) while maintaining said tension in the stretched pipe liner, inserting the pipe liner inside the tubular structure to be lined, and

(d) releasing the tension in the stretched pipe liner to allow it to contract longitudinally and expand radially against the inside wall of the tubular structure.

In an embodiment of the process of the present invention, the thermoplastic polymer is a polyolefin, especially a homopolymer of ethylene or a copolymer of ethylene and at least one alpha-olefin of 4 to 10 carbon atoms.

In another embodiment of the process of the present invention, the thermoplastic polymer is a nylon polymer, especially a nylon 6,6 polymer.

Optionally, the thermoplastic polymer may be rigid polyvinyl chloride or acrylonitrile-butadienestyrene.

In yet another embodiment of the process of the present invention, the steps of the process are repeated using a second pipe liner of thermoplastic polymer, said second pipe liner having an outside diameter greater than the inside diameter of the first pipe liner of thermoplastic polymer.

In a further embodiment of the process of the present invention, the thermoplastic polymer of one of the pipe liners is a homopolymer of ethylene or a copolymer of ethylene and at least one alpha-olefin of 4 to 10 carbon atoms and the thermoplastic polymer of the other pipe liner is nylon 6,6 polymer.

The pipe liner/ desirably has an initial outside diameter from about 2 percent to 6 percent larger than the inside diameter of the pipe section, in order to assure an interference fit with the pipe section after installation. Preferably the liner has an initial outside diameter from about 2 to 3 percent larger than the inside diameter of the pipe section.

Pipe sections to be lined by the method of the invention may be from about 1/2 inch (about 13 mm) to at least about 12 inches (about 300 mm) in inside diameter.

The lining operation can be carried out at ambient temperature, that is, from about -40°C to about 45°C, preferably from about -20°C to 30°C.

It is critical that the amounts of strain undergone by the pipe liner be within the elastic-plastic range for the particular thermoplastic polymer selected. In the case of high-density polyethylene materials, the substantially fully elastic range of strain is from zero to about 7 percent; above 7 percent strain and below the fully plastic range, the material exhibits a combination of elastic and plastic properties such that the total recovery upon removal of the stress is greater than 7 percent but less than the original amount of strain applied to the plastic material. This range is herein defined as the elastic-plastic range, and for polyethylene has an upper limit of about 18 to 20 percent, depending upon the grade of polyethylene polymer. Above the elastic-plastic range, in the fully plastic range, a test sample will exhibit primarily permanent deformation. Thus the total reduction in diameter should be no more than about 20 percent where a polyethylene liner is used, depending upon the type of polyethylene polymer. Where other thermoplastic polymers are used in the liner, the elastic-plastic properties of such thermoplastic polymers will govern the amount of permitted reduction in diameter.

In order to limit the amount of permanent deformation in the pipe liner, the liner is maintained under tension in the elongated state for no more than 2 hours, preferably for no more than 1 hour.

The pipe liner of thermoplastic polymer used in the process of the present invention may be made from any thermoplastic polymer which, when made into a pipe liner, is capable of being cold stretched by a substantial amount under tension and yet when the tension is removed will contract by a major portion of the amount it was stretched. Preferred thermoplastic polymers are polyolefins, especially polyethylene, i.e., homopolymers of ethylene or copolymers of ethylene and at least one alpha-olefin of 4 to 10 carbon atoms, and nylon polymers, especially nylon 6,6 and nylon 6 polymers. To illustrate the suitability of polyethylene, two pipe liners of different polyethylene polymer were cold stretched until the length of the pipe liners had been increased by 10% and 13%, respectively. The diameters of the pipe liners were reduced by 4.6% and 6%, respectively, during the cold stretching step. When the tension was released, the pipe liners contracted to the extent that the resultant pipe liners were 0.8% and 1.33%, respectively, longer than the pipe liners prior to stretching; the diameters of the resultant pipe liners were 1.7% and 1.0%, respectively, less than the diameters of the pipe liners prior to stretching.

Embodiments of the present invention will be described in greater detail with the aid of the accompanying drawings in which:

Figure 1 is a schematic view of apparatus for carrying out an embodiment of the process of the present invention showing a pipe liner of thermoplastic polymer being cold stretched by a pair of tension members; one tension member extending through the tubular member that is to be lined; and

Figure 2 is a schematic view of another apparatus for carrying out an embodiment of the present invention showing a pipe liner of thermoplastic polymer being cold stretched by fixing one end thereof and using a push-rod extending through the pipe liner.

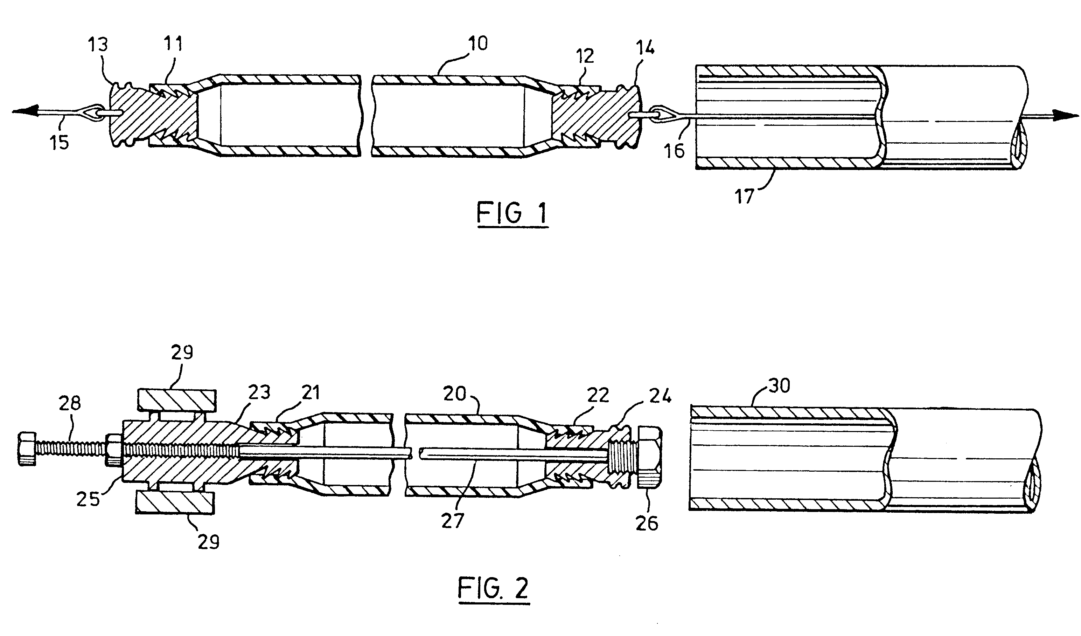

Referring to Figure 1 of the drawings, a thermoplastic polymer pipe liner 10 has ends 11 and 12 of reduced diameter, compared to pipe liner 10, that have been fitted with barbed couplers 13 and 14 respectively. The reduction in the diameters of ends 11 and 12 of pipe liner 10 may be carried out using a swaging tool heated to near the softening point of the thermoplastic polymer. After the swaging tool has been held at a temperature near said softening point for a few minutes, the swaging tool is cooled and removed. The barbed couplers 13 and 14 may be installed by, for example, heating the couplers to near the softening point of the thermoplastic polymer; pushing the heated couplers into the ends 11 and 12 of the pipe liner; and compressing the ends of the pipe liner, for example with gear clamps, to set the barbs of the couplers 13 and 14 in the pipe liner ends 11 and 12. If desired, the clamps may then be removed and, optionally, replaced with glass fibre reinforced tape.

Tension members 15 and 16 are attached to

DC-0193

couplers 13 and 14, respectively; tension member 16 extending through tubular member 17 which is to be lined with pipe liner 10. Pipe liner 10 has an outside diameter greater than the inside diameter of tubular member 17 but is capable of being stretched so that said outside diameter is less than said inside diameter.

In operation, tension is applied to tension members 15 and 16, by means not shown, to stretch pipe liner 10 sufficiently to reduce the outside diameter thereof to less than the inside diameter of tubular member 17. Pipe liner 10 is inserted into tubular member 17. It will be appreciated by those skilled in the art that either the pipe liner 10 or the tubular member 17 can be fixed and the other element moved, so that the tubular member 17 is fully lined by the liner 10. The tension in tension members 15 and 16 is then released, thus allowing pipe liner 10 to contract longitudinally and expand radially into tight contact with the inner surface of tubular member 17. It will be appreciated that the portions of pipe liner 10 that extend beyond the ends of tubular member 17 (other than the portions of reduced diameter) will expand to an outside diameter larger than the inside diameter of tubular member 17. The portion of pipe liner 20 extending beyond the ends of tubular member 17 may readily be cut to an appropriate length and flanged by known methods to provide a sealable pipe joint.

Referring now to Figure 2 of the drawings, a thermoplastic polymer pipe liner 20 has ends 21 and 22 of reduced diameter that have been fitted with barbed couplers 23 and 24, respectively as described above with respect to Figure 1. An internally threaded member 25 is integrally connected to coupler 23 and a bolt 26 is screwed into the outer end of coupler 24,

DC-0193

which has suitable internal threads therein. A push-rod 27 extends through coupler 23, pipe liner 20 and coupler 24 such that the end thereof contacts bolt 26. A long bolt 28 is screwed into member 25 to contact the end of push-rod 27. Member 25 is held firmly by a pair of vice jaws 29. Tubular member 30, which is to be lined with pipe liner 20, is shown adjacent to bolt 26.

In operation, bolt 28 is screwed in against push-rod 27, thereby moving bolt 26 relative to member 25, so as to stretch pipe liner 20 such that the outside diameter thereof is reduced to less than the inside diameter of tubular member 30. Tubular member 30 is then positioned over tube 20 and bolt 28 is unscrewed, thus allowing tube 20 to contract longitudinally and to expand radially into tight contact with the inner surface of tubular member 30.

It will be appreciated that the process of the present invention, using, for example, the apparatus shown in Figure 1 or in Figure 2, may be used to produce tubular structures with multiple linings, for example, a nylon 6,6 polymer lining on top of a polyethylene liner. To carry out such a method, the reduced diameter ends of the first pipe liner are cut off and the process is repeated using a second thermoplastic polymer pipe liner having an outside diameter larger than the inside diameter of the first pipe liner.

The present invention is illustrated by the following example.

### Example

A steel pipe 1.83 metres (6 feet) in length was lined with a polyethylene pipe liner using the apparatus and method shown in Figure 2 of the drawings and described hereinbefore.

The steel pipe 30 had an inside diameter of 4.13 cm (1.63 in). The polyethylene pipe liner 20 was approximately 2.1 metres (7 feet) in length and had an outside diameter of 4.28 cm (1.69 in). The polyethylene pipe liner 20 was made from ethylene/butene-1 copolymer pipe resin having a density of 0.941 g/cm3 and a melt index in the range of 0.25 to 0.35 dg/min.

The ends 21 and 22 of pipe liner 20 were reduced in diameter using a swaging tool which was pushed onto the pipe liner ends with the aid of a hydraulic cylinder. The swaging tool was heated to 115°C, pushed onto the end of the pipe liner 20, heated to 122-124°C for 2 minutes, quenched with cold water to cool it and them removed. Barbed couplers 23 and 24 were fitted in pipe liner ends 21 and 22, respectively as follows: the couplers were each heated to a temperature of approximately 110°C, pushed into the pipe liner ends, and the pipe liner ends were each clamped with four gear clamps while still hot. After the pipe liner ends had cooled, the four gear clamps were removed from pipe liner end 22 and replaced with six layers of glass fibre-reinforced tape. Internally threaded member 25, which was integrally connected to coupler 25, was clamped in vice jaws 29 and bolt 26 was screwed into the outer end of coupler 24. Pushrod 27 was inserted through threaded member 25, coupler 23, pipe liner 20 and coupler 24 until it contacted bolt 26. Bolt 28 was screwed into member 25 to contact the other end of push-rod 27.

Bolt 28 was then screwed in against push-rod 27 to stretch pipe liner 20 by about 18.5 cm (7.25 in) over a period of about 3 minutes. The outside diameter of pipe liner 20 was reduced from 4.28 cm (1.69 in) to 4.12 cm (1.62 in).

Steel pipe 30 was then positioned over pipe liner 20 and bolt 28 was unscrewed to release the tension from pipe liner 20. Immediately after the tension was released, pipe liner 20 contracted in length by 3.17 cm (1.25 in) and expanded in diameter into tight contact with the inside surface of steel pipe 30. After four hours pipe liner 20 had contracted by an additional 1.57 cm (0.62 in) in length and it was obvious that the outside diameter of pipe liner 20, beyond the ends of steel pipe 30, was considerably greater than the inside diameter of steel pipe 30.

The method of the invention exhibits a number of important benefits not available from prior art methods. An important advantage is that the entire lining operation may be undertaken at ambient temperature; it is not necessary to supply large quantities of heated fluid, e.g. water, in order to cause reversion of the liner into tight contact with the pipe line section and therefore the method of the invention enjoys a considerable cost advantage over other methods. A further advantage of the method of the invention is that the expansion of the liner occurs rapidly after the tension is removed from the pipe liner. Thus the pipe liner becomes fixed in the tubular member, that is, in the pipe section. The liner is generally fully contracted after a period of several hours, and can then be cut to length and a joint prepared, for example by flanging.

DC-0193

What is claimed is:

1.    A method for producing a tubular structure lined with thermoplastic polymer, the method comprising the steps of:

(1)   providing a pipe liner of thermoplastic polymer having an outside diameter greater than the inside diameter of the tubular structure to be lined,

(2)   reducing the outer diameter of the pipe liner to less than the inside diameter of the tubular structure to be lined, and

(3)   inserting the pipe liner inside the tubular structure to be lined, characterized in that:

(a)   the pipe liner is stretched in a longitudinal direction under sufficient tension to reduce the outer diameter of the liner to less than the inside diameter of the tubular structure,

(b)   the tension on the stretched pipe liner is maintained during the insertion step, and

(c)   the tension on the stretched pipe liner is released to allow it to contract longitudinally and expand radially against the inside wall of the tubular structure.

2.    A method for producing a tubular structure lined with thermoplastic polymer, the method comprising in sequence:

(1)   providing a pipe liner of synthetic thermoplastic polymer having an outside diameter larger than the inside diameter of the tubular structure to be lined,

(2)   reducing the diameter of said liner, so that the reduced outside diameter of said

DC-0193

liner is sufficiently smaller than the inside diameter of the tubular structure to be lined that the liner readily passes through the tubular structure, and

(3) inserting the pipe liner inside the tubular structure to be lined, characterized in that:

(a) said pipe liner has an original outside diameter from about 2 percent to about 6 percent larger than the inside diameter of the tubular structure to be lined,

(b) the diameter of the liner is reduced by applying tension in a longitudinal direction to the liner, so that the elongation of the liner is below the upper limit of the elastic-plastic range for the polymer of the liner,

(c) the tension on the liner is maintained during the insertion step, and

(d) the tension on the liner is released to allow it to contract longitudinally and expand radially against the inside wall of the tubular structure.

3. The method according to any of the preceding claims wherein the thermoplastic polymer is a polyolefin.

4. The method according to Claim 4, wherein the polyolefin is a homopolymer of ethylene or a copolymer of ethylene and at least one alpha-olefin of 4 to 10 carbon atoms.

5. The method according to Claim 1 or Claim 2, wherein the thermoplastic polymer is nylon.

6. The method according to Claim 5 wherein the nylon polymer is nylon 6,6.

DC-0193

7.    The method according to any of the preceding claims carried out at a temperature from -20°C to 30°C.

8.    The method according to any of the preceding claims wherein the inside diameter of the tubular structure is from about 13 mm to about 300 mm.

9.    The method according to any of the preceding claims wherein the pipe liner is elongated by no more than about 20 percent.

10.    The method according to any of the preceding claims wherein the pipe liner has an initial outside diameter from about 2 percent to 6 percent larger than the inside diameter of the tubular structure.

11.    The method according to any of the preceding claims wherein the pipe liner is maintained under tension for no more than 1 hour.

12.    The method according to Claim 1 or Claim 2, wherein the steps are repeated using a second pipe liner of thermoplastic polymer, said second pipe liner having an outside diameter greater than the inside diameter of the first pipe liner of thermoplastic polymer.

13.    The method according to Claim 12 wherein the thermoplastic polymer of the first pipe liner is a homopolymer of ethylene or a copolymer of ethylene and at least one alpha-olefin of 4 to 10 carbon atoms and the thermoplastic polymer of the second pipe liner is nylon 6,6.

14.    A tubular structure when lined by the method of any of the preceding claims.

DC-0193

FIG 1

FIG. 2